# EUROPEAN PATENT APPLICATION

(11) **EP 4 382 582 A1**
(43) Date of publication of application: **12.06.2024**
(21) Application number: 22852389.0
(22) Date of filing: 01.08.2022
(51) Int. Cl.: C09K 5/00, C09K 5/02, F25B 29/00, C07F 5/06, C07F 15/02

(54) **COOLING/HEATING METHOD AND DEVICE BASED ON METAL-ORGANIC FRAMEWORKS AND INDUCED BY PRESSURE MODIFICATIONS**

(30) Priority: 02.08.2021 ES 202130753
(71) Applicant: Universidade da Coruña, 15071 A Coruña (ES)
(72) Inventor: BERMÚDEZ GARCÍA, Juan Manuel, 15071 A CORUÑA (ES); SEÑARÍS RODRÍGUEZ, María Antonia, 15071 A CORUÑA (ES); SÁNCHEZ ANDÚJAR, Manuel, 15071 A CORUÑA (ES); CASTRO GARCÍA, Socorro, 15071 A CORUÑA (ES); GARCÍA BEN, Javier, 15071 A CORUÑA (ES); LÓPEZ BECEIRO, Jorge José, 15071 A CORUÑA (ES); ARTIAGA DÍAZ, Ramón Pedro, 15071 A CORUÑA (ES)
(74) Representative: ZBM Patents - Zea, Barlocci & Markvardsen
(86) International application number: PCT/ES2022/070514
(87) International publication number: WO 2023/012393

(57) **Abstract**

The present invention relates to a cooling/heating method comprising the application and removal of a pressurising gas on a hybrid organic-inorganic porous material (MOF) whereby a breathing transition is produced, in which a change in volume in the structure of the compound occurs when its pores open/close, together with adsorption/desorption of a gas after applying and removing a pressurising gas on the compound; breathing which occurs at temperatures close to ambient temperature (from -20°C to 60°C) and at low pressures (from 10⁻⁵ bar up to 50 bar) and with great isothermal entropy changes (> 100 J K⁻¹ kg⁻¹). The invention also relates to a cooling/heating device comprising the hybrid materials defined above.

## Description

This application claims the priority of Spanish patent application P202130753 filed on 2 August 2021.

### TECHNICAL FIELD

The present invention is related to cooling/heating methods based on the use of porous organic-inorganic hybrid compounds belonging to the family of compounds called Metal-Organic Frameworks or MOFs, which present a first-order phase transition where opening/closing of the pores of the materials occurs, combined with adsorption/desorption of gases that is very sensitive to changes in pressure of a pressurising gas (effect known as breathing transition, gate opening transition or pore opening transition of MOFs), together with a device comprising said MOFs with the mentioned breathing transitions, and means for applying/removing pressure by means of a pressurising gas and vacuum pump, as well as the use of "MOF" compounds" for cooling and heating applications.

### STATE OF THE ART

According to recent reports from the International Energy Agency, around 20% of global electricity consumption is dedicated to cooling technologies, such as refrigerators, freezers, heating, ventilation and air conditioning (HVAC) appliances, etc. Furthermore, demand for this sector is expected to grow significantly in the coming decades. In parallel, the current COVID-19 pandemic has highlighted the enormous importance of cooling. This global disaster has forced us to improve the ventilation of buildings to avoid airborne transmission indoors, without neglecting the maintenance of the comfort temperature for the people who may be in said buildings. Along these lines, one of the most pressing challenges continues to be the cooling of COVID-19 vaccines, which represents a significant barrier that limits global distribution and access to said vaccines.

Today, most cooling technologies are based on compression/expansion cycles of volatile refrigerant gases, first used more than 180 years ago. These technologies, although long-standing and well-established, continue to operate below their maximum theoretical thermodynamic efficiency (with a mean efficiency of only 60%). In turn, cooling systems represent 7% of global greenhouse gas emissions, where 5% is due to indirect emissions derived from the inefficient energy consumption of these technologies, and 2% is due to direct emissions of refrigerant gases, mainly fluorinated hydrocarbons (F-gases) with a global warming potential (GWP) thousands of times higher than that of CO₂. Therefore, the Kigali Agreement and the F-gas regulation (EU Regulation No. 517/2014) call for 80% of these fluorinated refrigerants to be phased out by 2030.

In this critical situation, the main alternative to F-gases are non-fluorinated hydrocarbons, ammonia or CO₂, which have a low GWP. However, these alternatives also pose new risks for the environment and the user. For example, most hydrocarbons are flammable, and ammonia is highly toxic and corrosive.

As for CO₂, this is a chemically stable, non-toxic, non-flammable, widely available, and low-priced gas. And although CO₂ is, without a doubt, the best-known greenhouse gas, it should be noted that for cooling applications it is extracted from the air. Therefore, it does not contribute to global warming, but rather the opposite; its use in cooling contributes to the reduction of CO₂ in the atmosphere.

Furthermore, CO₂ is one of the refrigerant gases that has a lower GWP. Therefore, CO₂ cooling systems could lead to net zero carbon emissions. In this sense, Europe is leading the use of CO₂ cooling systems with around 14% of total food stores employing systems of this type.

However, most CO₂ cooling systems require working pressures of between 45 and 70 bar for ambient temperatures, and between 100 and 150 bar for temperatures above 30°C. These pressures are much higher than those used by other refrigerant gases, which normally operate under a few tens of bar (10-20 bar).

On the other hand, an even greener alternative would be solid-state materials exhibiting solid-solid phase transitions, also induced by compression/expansion. These solid materials, known as barocaloric compounds, exhibit large thermal changes (isothermal changes in entropy, ΔS, or adiabatic changes in temperature, Δ*T*) associated with first-order transitions and which can be used for both cooling and heating similarly to refrigerant gases (see P. Lloveras et al., MRS Energy Sustain. 2021, 8, 3-15). A first-order transition is defined as a phase transition where a change in volume occurs between the first and second phases.

Some of these barocaloric compounds even exhibit thermal changes comparable to the thermal changes observed in commercial refrigerant gases, ΔS > 100 J K⁻¹ kg⁻¹ (see P. Lloveras et al. Nat. Commun. 2019, 10, 1-7). For this reason, barocaloric compounds have recently been postulated by the Henry Royce Institute as a promising tool to achieve the goal of zero carbon emissions by 2050 (see X. Moya, et al. Materials for the Energy Transition Roadmap, Henry Royce Inst. 2020). However, this report also highlights the need to drastically reduce the working pressure of barocaloric materials below 300 bar, since most of them require pressures between 1000 and 2500 bar (see P. Lloveras et al., MRS Energy Sustain. 2021, 8, 3-15).

Barocaloric materials that can operate at pressures between 1 and 70 bar, which represents a significant decrease in the working pressure of these materials, have also been described (see J. M. Bermúdez-García et al., Nat. Commun., 2017, 8, 15715; J. M. Bermúdez-García et al. J. Mater. Chem. C, 2018, 6 (37), 9867-9874). These low working pressures are due to the fact that the materials used, which are non-porous organic-inorganic hybrid compounds, are highly compressible due to the organic components present in their structures, which make them highly flexible. However, the thermal changes of these materials (Δ*S* < 40 J K⁻¹ kg⁻¹) and the working temperature range (*T*_{working} > 57°C) is relatively small compared to refrigerant gases, which limits the number of practical applications.

On the other hand, "MOF" type porous hybrid materials have also been extensively explored for cooling purposes, but with a different strategy: taking advantage of their notable adsorption properties. These porous hybrids use the changes in enthalpy induced by changes in environmental temperature that cause vaporisation of water molecules inserted in their cavities to induce a cooling effect (see M. F. De Lange et al. Chem. Rev. 2015, 115 (22), 12205-1225; WO2014028574A2; or WO2018118377A1). This mechanism is similar to adsorption cooling observed in zeolites and differs from barocaloric effects, where a first-order phase transition occurs induced by changes in pressure. However, a major drawback of these adsorption cooling methods is that they require the use of water as adsorbed/desorbed material, which implies a negative impact on the water footprint associated with these technologies, since if it evaporates in an open system water escapes into the atmosphere. Additionally, these systems cannot operate at temperatures near and/or below 0°C, since water is in a solid state and cannot be adsorbed/desorbed. Therefore, they cannot be used in freezers or refrigerators at low temperatures and are usually used for air conditioning systems. Likewise, they do not operate under changes in pressure, but rather under changes in environmental temperature, which is why they depend on external thermal sources.

In view of all this, it is clear that there is still great room for improvement to offer new solid materials that can exhibit large thermal changes for cooling and heating applications at temperatures close to ambient temperature (including freezers, refrigerators and HVAC appliances in general) and under small working pressures. In this sense, it is desirable to find new materials which exhibit major thermal changes (defined as ΔS > 100 J K⁻¹ kg⁻¹) and can operate at temperatures close to ambient temperature (including temperatures close to and/or below 0°C) and under pressures lower than 70 bar, conditions that have not been met in any solid material to date. In addition, it is also desirable for these materials not to consume or require the use of water or for them to be made in a closed system where it cannot escape into the atmosphere, which is a limited and essential resource for other more important areas of life.

### DESCRIPTION OF THE INVENTION

The inventors of the present invention have found that hybrid organic-inorganic compounds belonging to the family called Metal-Organic Frameworks or MOFs exhibiting breathing transitions can be used for cooling/heating applications in domestic, commercial and industrial cooling systems (including freezers, refrigerators and HVAC appliances in general) at temperatures close to ambient temperature, particularly at temperatures between -20°C and 60°C.

Thus, MOFs are a subclass of organic-inorganic hybrid materials that are defined as porous since they have a high porosity and specific surface area (see S.R. Batten et al., CrystEngComm, 2012, 14, 3001-3004). These materials differ from all barocaloric organic-inorganic hybrid materials that have been reported in the scientific literature or in patents, since all barocaloric hybrid materials described are non-porous materials (see G. Kieslich et al., Chem. Sci., 2014, 5, 4712, and J. Garcia-Ben et al., Coord.Chem.Rev., 2022, 454, 214337).

The advantage of the MOFs of the present invention with respect to the barocaloric hybrid materials described to date is that their high porosity allows them to have breathing transitions. These transitions are those that combine a first-order phase transition where an opening/closing of the pores of the materials occurs, together with an adsorption/desorption of gases due to the high porosity of the materials, which is very sensitive to changes in pressure of a pressurising gas.

Those MOFs with breathing transitions useful for cooling/heating applications in the mentioned systems and conditions must present changes in isothermal entropy greater than ΔS > 100 J K⁻¹ kg⁻¹, working temperature ranges between -20°C and 60°C, and working pressures of between 10⁻⁵ bar (10⁻⁶ MPa) and 50 bar (5 MPa).

A first-order phase transition is any transition that occurs where there is a change in entropy and volume and, in addition, the first-order derivatives of the Gibbs potential exhibit discontinuities. The materials of the present invention exhibit a first-order phase transition that implies that an opening/closing of the pores of the materials occurs, combined with an adsorption/desorption of gases that is very sensitive to changes in pressure of a pressurising gas (effect known as breathing transition, gate opening transition or pore opening transition of MOFs). The term breathing transition has been used as an equivalent to gate opening transition and pore opening transition.

Thus, a first aspect of the present invention relates to a cooling/heating method comprising: a) providing an organic-inorganic hybrid compound which is capable of undergoing a breathing transition consisting of a first-order phase transition in which a change in volume in the structure of the compound occurs when its pores open/close, together with adsorption/desorption of a gas after applying and removing a pressurising gas on the compound; b) inducing the breathing transition by means of a cycle of applying and removing pressure on the organic-inorganic hybrid material, in a pressure range ranging from 10⁻⁶ MPa up to 5 MPa; wherein: the application of pressure is generated by a pressurising gas that is selected from the group consisting of N₂, CO₂, CH₄, air, and a mixture of any of the above in any percentage proportion by volume; the removal of pressure is carried out by means of releasing the pressurising gas through a depressurisation valve, by means of applying a vacuum through a vacuum pump, or through a depressurising valve together with the application of vacuum of a vacuum through a vacuum pump; the breathing transition generates a change in temperature and occurs at a temperature comprised between -20°C and 60°C; and the breathing transition generates an isothermal change in entropy equal to or greater than 100 J K⁻¹ kg⁻¹.

In a particular embodiment, the hybrid organic-inorganic compounds used in the cooling/heating method generate an isothermal change in entropy equal to or greater than 250 J K⁻¹ kg⁻¹.

In an even more preferred embodiment, the hybrid organic-inorganic compounds used in the cooling/heating method generate an isothermal change in entropy equal to or greater than 400 J K⁻¹ kg⁻¹.

In a particular embodiment, the hybrid organic-inorganic compounds used in the cooling/heating method generate an isothermal change in entropy of between 100 and 400 J K⁻¹ kg⁻¹.

In another particular embodiment, the hybrid organic-inorganic compounds used in the cooling/heating method generate an isothermal change in entropy of between 100 and 250 J K⁻¹ kg⁻¹.

In a preferred embodiment, the hybrid organic-inorganic compounds used in the cooling/heating method generate an isothermal change in entropy of between 250 and 400 J K⁻¹ kg⁻¹.

The organic-inorganic hybrid compounds of the present invention, also called MOFs, are made up of two main components: a metal ion or group of metal ions and organic ligands acting as a bridge between the metallic centres, giving rise to potential voids (pores) in the structure with a diameter equal to or less than 50 nm. The pore size can be measured, for example, by X-ray diffraction. Thus, for example, a Bruker Kappa diffractometer equipped with an APEX II CCD detector and with monochromatic MoKα radiation (λ = 0.71073 Å) can be used, where the sample (in single-crystal form) can be mounted on an MiTeGen MicroMountTM using Paratone^{®} (Chevron Corporation) and cooled at 100 K. Data collection, integration and reduction can be performed with the APEX2 V2015.9-0 software package (Bruker AXS, 2015). The structures can be resolved by direct methods using the SHELXT2014 program and be refined by the least squares method in SHELXL2014/7.

In a particular embodiment, the pore diameter size is between 2 and 50 nm. In another particular embodiment, the pore diameter size is between 10 and 25 nm. In another particular embodiment, the pore diameter size is between 2 and 25 nm. In another particular embodiment, the pore diameter size is equal to or less than 2 nm.

In a particular embodiment, the hybrid compound is selected from the group consisting of [Cu₂(C₆H₄(COO)₂)₂(N₂(C₂H₄)₃)], [CU₂(C₆(CH₃(CH₂)₃O)₂H₂(COO)₂)₂(N₂(C₂H₄)₃)], [Zn(C₆H₄(COO)₂)(C₆H₄(C₅H₄N)₂)], [Zn(C₆H₄(COO)₂)(C₆H₂F₂(C₅H₄N)₂)], [Zn₂(C₆S₂(CH₃)₂(COO)₂)₂((C₅H₄N)₂(CH)₂)], [Zn₂(C₆S₂(CH₃)₂(COO)₂)₂((C₅H₄N)₂(CH₂)₂)], [Zn₂(C₆S₂(CH₃)₂(COO)₂)₂((C₅H₄N)₂C₂)], [Zn₂(C₆S₂(CH₃)₂(COO)₂)₂((C₅H₄N)₂N₂)], [Zn₂(C₂₀H₁₂O₄)₂(C₁₀H₈N₂)], [Zn₂(C₂₀H₁₂O₄)₂(C₁₀H₈N₂)]ₙ, [Cu(SiF₆)(C₆H₄(Si(OC₂H₅)₃)₂)], [(Ni(C₁₄H₃₄N₆))₂((C₆H₃)₂(COO)₄], [Cu(C₅H₄N)₂(BF₄)₂], [Co(C₅H₄N)₂(NCS)₂]ₙ, [Zn₂(C₆H₄(COO)₂)₂(C₅H₄N)], [(Me₂NH₂)In(C₆H₂(NH₂)₂(COO)₂)₂], [Cd(C₁₁H₉N₂O₂)₂], [Zn(C₆H₄(COO)₂)(C₂H₂N₃)]ₙ, [Zn₂(C₁₀H₆(COO)₂)₂((C₅H₄N)₂C₂)]ₙ, and M(OHₘ)[C₆X₄(COO)₂],
wherein: n is an integer greater than 1 which denotes that the molecular formula belongs to a polymer; M is selected from the group consisting of any metal cation of the periodic table with oxidation state +3, any metal cation of the periodic table with oxidation state +2, and a mixture of any of the above in any atomic proportion; m takes any value between 0 and 1 to compensate for the oxidation state of the M cations; and X is selected from the group consisting of H, Br, Cl, F, I, CH₃, CF₃, OCH₃, COOH, NH₂, NO₂, NCO, NCS, SH, SO₃H, and a mixture of any of the above in a proportion of 1:4, 2:4 and 3:4;

Also forming part of the invention is a cooling/heating method comprising: a) providing a porous organic-inorganic hybrid compound selected from the group consisting of [Cu₂(C₆H₄(COO)₂)₂(N₂(C₂H₄)₃)], [Cu₂(C₆(CH₃(CH₂)₃O)₂H₂(COO)₂)₂(N₂(C₂H₄)₃)], [Zn(C₆H₄(COO)₂)(C₆H₄(C₅H₄N)₂)], [Zn(C₆H₄(COO)₂)(C₆H₂F₂(C₅H₄N)₂)], [Zn₂(C₆S₂(CH₃)₂(COO)₂)₂((C₅H₄N)₂(CH)₂)], [Zn₂(C₆S₂(CH₃)₂(COO)₂)₂((C₅H₄N)₂(CH₂)₂)], [Zn₂(C₆S₂(CH₃)₂(COO)₂)₂((C₅H₄N)₂C₂)], [Zn₂(C₆S₂(CH₃)₂(COO)₂)₂((C₅H₄N)₂N₂)], [Zn₂(C₂₀H₁₂O₄)₂(C₁₀H₈N₂)], [Zn₂(C₂₀H₁₂O₄)₂(C₁₀H₈N₂)]ₙ, [Cu(SiF₆)(C₆H₄(Si(OC₂H₅)₃)₂)], [(Ni(C₁₄H₃₄N₆))₂((C₆H₃)₂(COO)₄], [Cu(C₅H₄N)₂(BF₄)₂], [Co(C₅H₄N)₂(NCS)₂]ₙ, [Zn₂(C₆H₄(COO)₂)₂(C₅H₄N)], [(Me₂NH₂)In(C₆H₂(NH₂)₂(COO)₂)₂], [Cd(C₁₁H₉N₂O₂)_{2]}, [Zn(C₆H₄(COO)₂)(C₂H₂N₃)]ₙ, [Zn₂(C₁₀H₆(COO)₂)₂((C₅H₄N)₂C₂)]ₙ, and M(OHₘ)[C₆X₄(COO)₂],
wherein: n is an integer greater than 1; M is selected from the group consisting of any metal cation of the periodic table with oxidation state +3, any metal cation of the periodic table with oxidation state +2, and a mixture of any of the above in any atomic proportion; m takes any value between 0 and 1 to compensate for the oxidation state of the M cations; and X is selected from the group consisting of H, Br, Cl, F, I, CH₃, CF₃, OCH₃, COOH, NH₂, NO₂, NCO, NCS, SH, SO₃H, and a mixture of any of the above in a molar ratio of 1:4, 2:4 and 3:4; and b) applying a cycle of applying and removing pressure on the organic-inorganic hybrid material, in a pressure range ranging from 10⁻⁶ MPa up to 5 MPa, to cause an opening/closing of the pores of the compound, together with adsorption/desorption of a pressurising gas and generate a change in temperature at a temperature between -20°C and 60°C and an isothermal change in entropy equal to or greater than 100 J K⁻¹ kg⁻¹, wherein: the application of pressure is generated by the pressurising gas that is selected from the group consisting of N₂, CO₂, CH₄, air, and a mixture of any of the above in any percentage proportion by volume; and the removal of pressure is carried out by means of releasing the pressurising gas through a depressurisation valve, by means of applying a vacuum through a vacuum pump, or through a depressurising valve, together with the application of a vacuum through a vacuum pump. The fact that n is an integer greater than 1 denotes that it is a polymer.

In a particular embodiment of the method defined in any of the above forms, the hybrid compound has molecular formula M(OHₘ)[C₆X₄(COO)₂], wherein: M is selected from the group consisting of V³⁺, Al³⁺, Cr³⁺, Fe³⁺, In³⁺, Ga³⁺, Sc³⁺, Fe²⁺, Co²⁺, Ni²⁺ and Mn²⁺, and a mixture of any of the metal cations mentioned above; and X is selected from the group consisting of the functional groups H, Br, Cl, F, I, CH₃, CF₃, OCH₃, COOH, NH₂, NO₂, NCO, NCS, SH and SO₃H, and a mixture of any of the functional groups mentioned above.

In a preferred embodiment, the organic-inorganic hybrid compound is Al(OH)[C₆H₄(COO)₂].

In another preferred embodiment, the organic-inorganic hybrid compound is [Zn₂(C₆H₄(COO)₂)₂(C₅H₄N)].

In another preferred embodiment, the organic-inorganic hybrid compound is Al_{0.5}Cr_{0.5}(OH)[C₆H₃NH₂(COO)₂].

In another preferred embodiment, the organic-inorganic hybrid compound is the compound Cr(OH)[C₆H₄(CO₂)₂].

In another preferred embodiment, the organic-inorganic hybrid compound is the compound Cr_{0.5}Fe_{0.5}(OH)[C6H₄(CO₂)₂].

In a particular embodiment, the cooling/heating method is carried out within a device by means of pressurising and depressurising a pressurising gas on the organic-inorganic hybrid compound defined above in a method that generally comprises the following steps: a) increasing the pressure by means of using a pressurising gas, which increases the temperature of the hybrid material;
b) maintaining the pressure reached in the preceding step for a given time period in which the hybrid material gives off heat and its temperature decreases;
c) reducing the pressure by means of removing pressurising gas so that the temperature of the hybrid material decreases even further; and d) maintaining the pressure reached in the preceding step for a time period in which the hybrid material absorbs heat and its temperature increases.

Generally, the time that the applied pressure is maintained is from 0.05-60 seconds. Preferably, the time that the applied pressure is maintained is from 1-10 seconds. More preferably, the time that the applied pressure is maintained is approximately 1 second.

Generally, the time that the removed pressure is maintained is from 0.05-60 seconds. Preferably, the time that the removed pressure is maintained is from 1-10 seconds. More preferably, the time that the removed pressure is maintained is approximately 1 second.

The term "approximately" in this document means the value indicated in the corresponding unit ± 5%.

In a particular embodiment, heat absorption of the material is used to produce a cooling method, while the heat generated by the material is discarded.

In another particular embodiment, the generation of heat of the material is used to produce a heating method, while the absorption of heat of the material is not used.

In another particular embodiment, the absorption of heat of the material is used to produce a cooling method, while the heat generated is used to produce a heating method.

In another particular embodiment, the cooling/heating method is one where, by applying pressure and maintaining the pressurising gas at constant pressure for a time period, excess heat is generated and transferred to a heat sink by direct contact of the hybrid material with said heat sink, or alternatively, by using a heat transfer fluid; and by removing the pressurising gas, the cooling of said hybrid compound occurs, and the absorption of heat from a chamber or space that is intended to be cooled by direct contact of the hybrid material with this chamber, or alternatively by using a heat transfer fluid, occurs.

In another particular embodiment, the cooling/heating method is one where the heat transfer fluid is selected from the pressurising gas itself, air, water, and alcohols.

As an example, in a first step of said method, the pressure is increased by using a pressurising gas on the organic-inorganic hybrid compound, for example, Al(OH)[C₆H₄(COO)₂], which causes this material to heat up. In the second step, the applied pressurising gas remains at constant pressure for a time period so that the excess heat generated is transferred to a heat sink. This excess heat generated can be directed to a heat sink, either by direct contact of the hybrid material with said heat sink or by using a heat transfer fluid (such as the pressurising gas itself, air, water, alcohols, etc.). In the third step, once the organic-inorganic hybrid compound has released the excess heat generated, the pressurising gas is removed, which causes said hybrid compound to cool. In the fourth step, by maintaining the pressurising gas removed for a certain time, the hybrid organic-inorganic compound (which has been cooled in the previous step) absorbs heat from a chamber (or space) that is intended to be cooled, for example, the interior of a refrigerator. Said heat is absorbed by direct contact of the hybrid material with this chamber or by using a heat transfer fluid (such as the pressurising gas itself, air, water, alcohols, etc.). This four-step method is repeated cyclically for a specific, predetermined time period in which the pressurising gas is responsible for automatically increasing and decreasing pressure in an infinite cycle.

In a particular embodiment the pressurising gas is selected from the group consisting of N₂, CO₂, CH₄ and air, and a mixture of any of the above in any percentage proportion by volume.

In a preferred embodiment, the pressurising gas is air. In an even more preferred embodiment, the pressurising gas is N₂. In an even more preferred embodiment, the pressurising gas is CO₂.

In a preferred embodiment, the pressurising gas increases the pressure from 1 bar (0.1 MPa) up to 50 bar (5 MPa). In an even more preferred embodiment, the pressurising gas increases the pressure from 1 bar (0.1 MPa) up to 40 bar (4 MPa). In an even more preferred embodiment, the pressurising gas increases the pressure from 1 bar (0.1 MPa) up to 30 bar (3 MPa). In an even more preferred embodiment, the pressurising gas increases the pressure from 1 bar (0.1 MPa) up to 20 bar (2 MPa). In an even more preferred embodiment, the pressurising gas increases the pressure from 1 bar (0.1 MPa) up to 10 bar (1 MPa). In an even more preferred embodiment, the pressurising gas increases the pressure from 1 bar (0.1 MPa) up to 5 bar (0.5 MPa).

In a preferred embodiment, the vacuum pump decreases the pressure from 1 bar (0.1 MPa) to 10⁻⁶ bar (10⁻⁷ MPa). In an even more preferred embodiment, the vacuum pump decreases the pressure from 1 bar (0.1 MPa) to 10⁻⁵ bar (10⁻⁶ MPa). In an even more preferred embodiment, the vacuum pump decreases the pressure from 1 bar (0.1 MPa) to 10⁻⁴ bar (10⁻⁵ MPa). In an even more preferred embodiment, the vacuum pump decreases the pressure from 1 bar (0.1 MPa) to 10⁻³ bar (10⁻⁴ MPa). In an even more preferred embodiment, the vacuum pump decreases the pressure from 1 bar (0.1 MPa) to 10⁻² bar (10⁻³ MPa). In an even more preferred embodiment, the vacuum pump decreases the pressure from 1 bar (0.1 MPa) to 10⁻¹ bar (10⁻² MPa).

In a preferred embodiment, the cycle of applying and removing pressure ranges from 10⁻⁵ bar (10⁻⁶ MPa) to 50 bar (5 MPa). In an even more preferred embodiment, the cycle of applying and removing pressure ranges from 10⁻⁴ bar (10⁻⁵ MPa) to 40 bar (4 MPa). In an even more preferred embodiment, the cycle of applying and removing pressure ranges from 10⁻³ bar (10⁻⁴ MPa) to 30 bar (3 MPa). In an even more preferred embodiment, the cycle of applying and removing pressure ranges from 10⁻³ bar (10⁻⁴ MPa) to 20 bar (2 MPa). In an even more preferred embodiment, the cycle of applying and removing pressure ranges from 10⁻² bar (10⁻¹ MPa) to 10 bar (1 MPa). In an even more preferred embodiment, the cycle of applying and removing pressure ranges from 10⁻¹ bar (10⁻⁵ MPa) to 10 bar (1 MPa). In an even more preferred embodiment, the cycle of applying and removing pressure ranges from 1 bar (0.1 MPa) to 10 bar (1 MPa).

In a particular embodiment, the hybrid organic-inorganic compounds used in the cooling/heating method of the present invention allow working in an operating temperature range of between -20°C and 60°C.

Preferably, the working temperature range is between -10°C and 40°C. More preferably, the working temperature range is between -5 and 30°C.

In a particular embodiment of the cooling/heating method, the organic-inorganic hybrid compound is Al(OH)[CeH₄(CO₂)₂].

In another particular embodiment of the cooling/heating method, the organic-inorganic hybrid compound is [Zn₂(CrH₄(COO)₂)₂(C₅H₄N)].

In another particular embodiment of the cooling/heating method, the organic-inorganic hybrid compound is Al_{0.5}Cr_{0.5}(OH)[C₆H₃NH₂(COO)₂].

In another particular embodiment of the cooling/heating method, the organic-inorganic hybrid compound is Cr_{0.5}Fe_{0.5}(OH)[C₆H₄(CO₂)₂].

In another particular embodiment of the cooling/heating method, the hybrid organic-inorganic compound is the compound Cr(OH)[C₆H₄(CO₂)₂].

In another preferred embodiment of the cooling/heating method, the organic-inorganic hybrid compound is the compound Cr_{0.5}Fe_{0.5}(OH)[C₆H₄(CO₂)₂].

Furthermore, another aspect of the present invention relates to the use of hybrid organic-inorganic materials as cooling/heating materials for cooling/heating devices in applications close to ambient temperature (including freezers, refrigerators and HVAC appliances in general), in particular, for applications with a working temperature ranging from -20°C to 60°C.

The particular and preferred embodiments of the cooling/heating method described above are also particular and preferred embodiments in this embodiment of the invention.

These materials can be incorporated into a cooling/heating device. The device can be used in different sectors such as the cooling/heating sector of air conditioning and heat pumps, HVAC appliances in general, domestic cooling appliances, industrial cooling appliances, commercial cooling appliances, refrigerators, freezers, electronic appliances, automobiles, personal protective equipment, etc.

Therefore, another aspect of the present invention comprises a cooling/heating device the cooling capacity of which is generated by means of a pressure variation by a pressurising gas, application of a vacuum, or a pressure variation by a pressurised gas, together with the application of a vacuum, said device comprising: (1) a hybrid organic-inorganic compound with breathing transition as defined above; and (2) means for applying and removing pressure cyclically by means of using a pressurising gas, a vacuum, or a pressure variation by a pressurised gas, together with the application of a vacuum, on said organic-inorganic hybrid compound for a given time period.

The particular and preferred values of pressure exerted by the pressurising gas and by the vacuum defined above for the cooling/heating method are also particular/preferred values for the media of the device.

In another particular embodiment, the device of the invention further comprises:
(3) a heat sink that is responsible for dissipating heat to the outside; (4) optionally a heat exchange fluid; and (5) a chamber or space that needs to be cooled.

The heat sink could be, for example, a fan, a radiator, etc. The heat exchange fluid is optional and, if present, could be selected from the pressurising gas itself, air, water, alcohols, oils, etc. As an example, in the case of a refrigerator, the chamber or space that needs to be cooled would be the inner chamber of said refrigerator. As another example, in the case of a smartphone, the space that would need to be cooled would be the inside of the phone. In another example, in the case of an air conditioner or heat pump, the reservoir would be the interior of the building or room where the temperature is to be controlled.

Furthermore, in the cooling/heating device, the organic-inorganic hybrid compound with breathing transition can be used in the form of a powder within a reservoir contained in the cooling/heating device, or as a coating in the pressurising gas conduction pipes, or as a thin film (thin layer) in electronic devices, in the form of micrometric particles with a diameter equal to or less than 1000 µm, submicrometric particles with a size equal to or less than 1 µm, or a mixture thereof, embedded in fabrics, for example, clothing, footwear and personal protective equipment (PPE). The size of the particles can be determined, for example, by transmission electron microscopy. Thus, for example, a JEOL 1010 model transmission electron microscope operating at 100 kV can be used, wherein the sample (in the form of a powder suspended in isopropanol) is deposited on a copper grid and introduced on the sample holder of the microscope.

Thus, in a particular embodiment of the cooling/heating device, the organic-inorganic hybrid compound with breathing transition is in the form of a coating on the pressurising gas conduction pipes.

In another particular embodiment of the cooling/heating device, the organic-inorganic hybrid compound with breathing transition is in the form of a powder within a reservoir contained in the cooling/heating device.

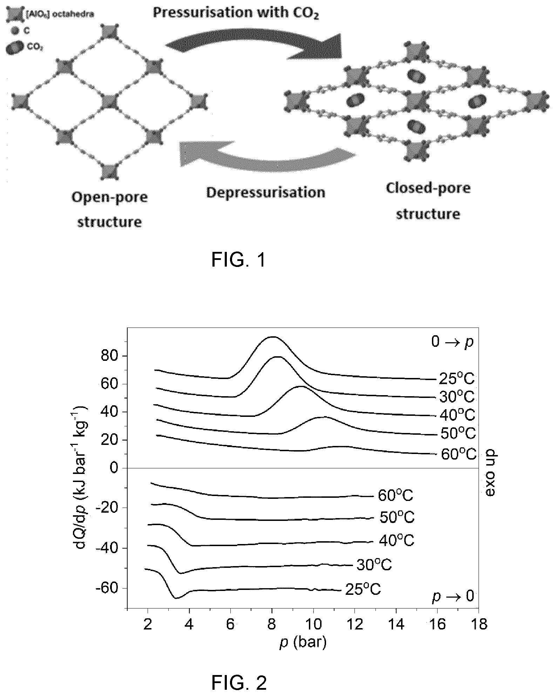

A particular embodiment of the present invention comprises an organic-inorganic hybrid compound with breathing transition of formula Al(OH)[C₆H₄(CO₂)₂] (that is, a compound of formula M(OH)ₘ[C₆X₄(CO₂)₂], where M is the Al³⁺ cation, m = 1, and X = H). This compound exhibits the crystalline structures obtained by means of single-crystal X-ray diffraction illustrated in FIG. 1, reported in A. Boutin et al., J. Phys. Chem. C, 2010, 53, 22237-22244, which represent the open-pore and closed-pore polymorphs (structures) associated with the breathing transition.

By way of example, single-crystal X-ray diffraction at ambient temperature shows that the compound Al(OH)[CᵣH₄(CO₂)₂] has an open-pore crystal structure with orthorhombic symmetry and the following cell parameters a = 19.513(2) Å, b = 7.612(1) Å, c = 6.576(1) Å.

Throughout the description and the claims, the word "comprise" and its variants are not intended to exclude other technical features, additions, components or steps. Furthermore, the word "comprises" includes the case "consists of". For those skilled in the art, other objects, advantages and features of the invention will be deduced from both the description and the practical use of the invention. The following examples and drawings are provided by way of illustration, and are not intended to be limiting of the present invention. Furthermore, the present invention covers all possible combinations of particular and preferred embodiments indicated herein.

### BRIEF DESCRIPTION OF THE FIGURES

FIG. 1: Crystal structures of the compound Al(OH)[C₆H₄(CO₂)₂] obtained by single-crystal X-ray diffraction. Note: the structure on the left corresponds to the open-pore polymorph when the material is depressurised while the structure on the right corresponds to the closed-pore polymorph when the material is pressurised by CO₂ gaseous.
FIG. 2: Calorimetric curves as a function of pressure at different isothermal conditions of the compound Al(OH)[CeH₄(CO₂)₂].

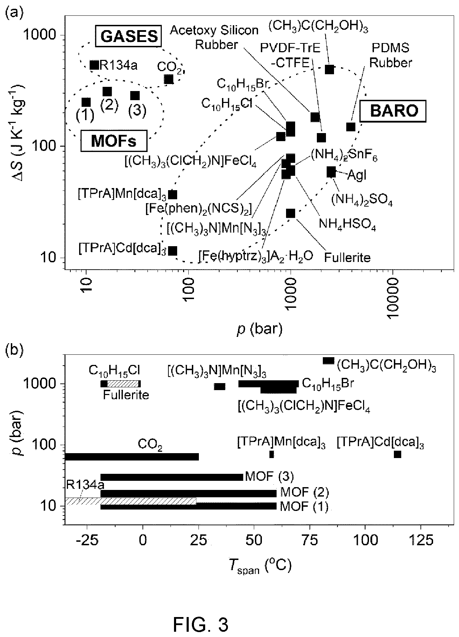

FIG. 3: Thermal properties ((a) isothermal change in entropy, ΔS, and (b) working temperature range, *T*ₛₚₐₙ, versus working pressure, p, at which the previous parameters are observed) of the materials MOF (1) = Al(OH)[C₆H₄(CO₂)₂], MOF (2) = Al_{0.5}Cr_{0.5}(OH)[C₆H₄(CO₂)₂] and MOF (3) = [Zn₂(C₆H₄(COO)₂)₂(C₅H₄N)] compared to those properties of some of the best commercial gaseous refrigerants and barocaloric solid materials. Note: the different shaded areas correspond to the areas where the different materials show their thermal properties: GASES = refrigerant gases; BARO = barocaloric solid materials, MOFs = Metal-Organic Frameworks with breathing transitions.

### EXAMPLES

### Example 1: Determination of thermal properties (isothermal change in entropy, working pressure range and working temperature range).

The thermal properties of the materials described here were studied by differential scanning calorimetry. In this way, around 4 mg of sample of the different materials were analysed in a TA Instruments Q2000 calorimeter equipped with a pressure cell. The samples were maintained in different isothermal conditions at different temperatures while they were subjected to pressurisation and depressurisation ramps by means of a pressurising gas (CO₂) at a speed of ~1 bar min⁻¹, and under CO₂ atmosphere. These pressurisation and depressurisation cycles were carried out at a minimum pressure of 1 bar and a maximum of 50 bar. Figure 2 shows the calorimetric curves obtained for the example Al(OH)[CeH₄(CO₂)₂]. Figure 3 shows the thermal properties (isothermal change in entropy, ΔS, working temperature range, *T*ₛₚₐₙ, and working pressure, p, at which the previous parameters are observed) of the material Al(OH)Al(OH)[C₆H₄(CO₂)₂], Al_{0.5}Cr_{0.5}(OH)[C₆H₄(CO₂)₂] and [Zn₂(C₆H₄(COO)₂)₂(C₆H₄N)] compared to those properties of some of the best commercial gaseous refrigerants and barocaloric solid materials. The isothermal change in entropy is obtained by integrating the calorimetric curves obtained and dividing the value obtained by the isothermal temperature at which the measurement was taken. The working temperature range is defined as the range between the maximum and minimum temperature values where the value of the isothermal change in entropy is different from 0 J K⁻¹ kg⁻¹. The working pressure range is defined as the range between the maximum and minimum pressure values where the value of the isothermal change in entropy is different from 0 J K⁻¹ kg⁻¹.

### LIST OF REFERENCES

### Non-patent literature

- Regulation EU No 517/2014
- P. Lloveras, J.-L. Tamarit, MRS Energy Sustain. 2021, 8, 3-15
- P. Lloveras, A. Aznar, M. Barrio, P. Negrier, C. Popescu, A. Planes, L. Mañosa, E. Stern-Taulats, A. Avramenko, N. D. Mathur, X. Moya, J.L. Tamarit, Nat. Commun. 2019, 10, 1-7
- X. Moya, I. M. Ilevbare, Materials for the Energy Transition Roadmap: Caloric Energy Conversion Materials. Henry Royce Inst. 2020
- J. M. Bermúdez-García et al., Nat. Commun., 2017, 8, 15715
- J. M. Bermúdez-García et al. J. Mater. Chem. C, 2018, 6 (37), 9867-9874
- M. F. De Lange et al. Chem. Rev. 2015, 115 (22), 12205-1225
- S.R. Batten et al., CrystEngComm, 2012, 14, 3001-3004
- G. Kieslich et al., Chem. Sci., 2014, 5, 4712
- J. García-Ben et al., Coord.Chem.Rev., 2022, 454, 214337
- M. Alhamami et al., 2014, 7, 3198-3250
- A. Boutin et al., J. Phys. Chem. C, 2010, 53, 22237-22244

### Patent literature

- WO2014028574A2
- WO2018118377A1

## Claims

1. A cooling/heating method comprising:
a) providing a porous organic-inorganic hybrid compound which is capable of undergoing a breathing transition consisting of a first-order phase transition in which a change in volume in the structure of the compound occurs when its pores open/close, together with adsorption/desorption of a gas after applying and removing a pressurising gas on the compound;
b) inducing the breathing transition by means of a cycle of applying and removing pressure on the organic-inorganic hybrid material, in a pressure range ranging from 10⁻⁶ MPa up to 5 MPa;
wherein:
the application of pressure is generated by a pressurising gas that is selected from the group consisting of N₂, CO₂, CH₄, air, and a mixture of any of the above in any percentage proportion by volume;
the removal of pressure is carried out by means of releasing the pressurising gas through a depressurisation valve, by means of applying a vacuum through a vacuum pump, or through a depressurisation valve together with the application of a vacuum through a vacuum pump;
the breathing transition generates a change in temperature and occurs at a temperature comprised between -20°C and 60°C;
the breathing transition generates an isothermal change in entropy equal to or greater than 100 J K⁻¹ kg⁻¹.

2. The cooling/heating method according to claim 1, which is for applications with a working temperature ranging from -20°C to 60°C.

3. The cooling/heating breathing method according to any of claims 1-2, wherein the organic-inorganic hybrid compound is selected from the group consisting of [Cu₂(C₆H₄(COO)₂)₂(N₂(C₂H₄)₃)], [Cu₂(C₆(CH₃(CH₂)₃O)₂H₂(COO)₂)₂(N₂(C₂H₄)₃)], [Zn(C₆H₄(COO)₂)(C₆H₄(C₅H₄N)₂)], [Zn(C₆H₄(COO)₂)(C₆H₂F₂(C₅H₄N)₂)], [Zn₂(C₆S₂(CH₃)₂(COO)₂)₂((C₅H₄N)₂(CH)₂)], [Zn₂(C₆S₂(CH₃)₂(COO)₂)₂((C₅H₄N)₂(CH₂)₂)], [Zn₂(C₆S₂(CH₃)₂(COO)₂)₂((C₅H₄N)₂C₂)], [Zn₂(C₆S₂(CH₃)₂(COO)₂)₂((C₅H₄N)₂N₂)], [Zn₂(C₂₀H₁₂O₄)₂(C₁₀H₈N₂)], [Zn₂(C₂₀H₁₂O₄)₂(C₁₀H₈N₂)]ₙ, [Cu(SiF₆)(C₆H₄(Si(OC₂H₅)₃)₂)], [(Ni(C₁₄H₃₄N₆))₂((C₆H₃)₂(COO)₄], [Cu(C₅H₄N)₂(BF₄)₂], [Co(C₅H₄N)₂(NCS)₂]ₙ, [Zn₂(C₆H₄(COO)₂)₂(C₅H₄N)], [(Me₂NH₂)In(C₆H₂(NH₂)₂(COO)₂)₂], [Cd(C₁₁H₉N₂O₂)₂], [Zn(C₆H₄(COO)₂)(C₂H₂N₃)]ₙ, [Zn₂(C₁₀H₆(COO)₂)₂((C₅H₄N)₂C₂)]ₙ, and M(OHₘ)[C₆X₄(COO)₂],
wherein:
n is an integer greater than 1;
M is selected from the group consisting of any metal cation of the periodic table with oxidation state +3, any metal cation of the periodic table with oxidation state +2, and a mixture of any of the above in any atomic proportion;
m takes any value comprised between 0 and 1 to compensate for the oxidation state of the M cations; and
X is selected from the group consisting of H, Br, Cl, F, I, CH₃, CF₃, OCH₃, COOH, NH₂, NO₂, NCO, NCS, SH, SO₃H, and a mixture of any of the above at a molar ratio of 1:4, 2:4, and 3:4.

4. The cooling/heating method according to any of claims 1-3, wherein the organic-inorganic hybrid material is the compound Al(OH)[C₆H₄(CO₂)₂].

5. The cooling/heating method according to any of claims 1-3, wherein the organic-inorganic hybrid material is the compound Cr_{0.5}Fe_{0.5}(OH)[C₆H₄(CO₂)₂].

6. The cooling/heating method according to any of claims 1-3, wherein the organic-inorganic hybrid material is the compound Cr(OH)[C₆H₄(CO₂)₂].

7. The cooling/heating method according to any of claims 1-3, wherein the organic-inorganic hybrid material is the compound Al_{0.5}Cr_{0.5}(OH)[C₆H₄(CO₂)₂].

8. The cooling/heating method according to any of claims 1-3, wherein the organic-inorganic hybrid material is the compound [Zn₂(CrH₄(COO)₂)₂(C₅H₄N)].

9. The cooling/heating method according to any of claims 1-8, wherein said method is cyclical and continuous, and wherein each cycle further comprises:
a) applying and maintaining the pressurising gas for a given time period, during which the hybrid material releases heat which is conducted to the outside;
b) removing the pressurising gas for a given time period, during which the hybrid material cools down and the cooling/heating cycle is completed.

10. The cooling/heating method according to claim 9, wherein:
by applying pressure and maintaining the pressurising gas at a constant pressure for a time period, excess heat is generated and is transferred to a heat sink by direct contact of the hybrid material with said heat sink, or alternatively, using a heat transfer fluid; and
by removing the pressurising gas, the cooling of said hybrid compound occurs, and the absorption of heat from a chamber or space that is intended to be cooled by direct contact of the hybrid material with this chamber, or alternatively by using a heat transfer fluid, occurs.

11. The cooling/heating method according to any of claims 9-10, wherein the heat transfer fluid is selected from the pressurising gas itself, air, water, and alcohols.

12. Use of a porous organic-inorganic hybrid material which is capable of undergoing a breathing transition consisting of a first-order phase transition in which a change in volume in the structure of the compound occurs when its pores open/close, together with adsorption/desorption of a gas after applying and removing a pressurising gas on the compound, as defined in any of claims 1-8, for cooling/heating for applications with a working temperature ranging from -20°C to 60°C, wherein for said applications the material is part of a device.

13. A device with cooling/heating capacity induced by pressure variation by a pressurising gas, application of a vacuum, or by pressure variation by a pressurising gas together with the application of a vacuum, comprising:
a) a porous organic-inorganic hybrid material which is capable of undergoing a breathing transition consisting of a first-order phase transition in which a change in volume in the structure of the compound occurs when its pores open/close, together with adsorption/desorption of a gas after applying and removing a pressurising gas on the compound, as defined in any of claims 1-8; and
b) means for applying/removing the pressurising gas on said hybrid material for a given time period.

14. The device according to claim 13, wherein the porous organic-inorganic hybrid material with breathing transition is in the form of a powder within a reservoir contained in the cooling/heating device.

15. The device according to claim 13, wherein the porous organic-inorganic hybrid material with breathing transition is in the form of a coating on the pressurising gas conduction pipes.

16. The device according to claim 13, which is an electronic apparatus, wherein the organic-inorganic hybrid material is in the form of a thin film.

17. The device according to claim 13, wherein the porous organic-inorganic hybrid material with breathing transition is in the form of micrometric particles, submicrometric particles, or a mixture thereof, embedded in a fabric.

18. The device according to any of claims 13-17, further comprising:
c) a heat sink that is responsible for dissipating heat to the outside;
d) optionally a heat exchange fluid; and
e) a chamber or space that needs to be cooled.
